# EUROPEAN PATENT SPECIFICATION

(11) **EP 0 391 301 B1**
(45) Date of publication and mention of the grant of the patent: **01.09.1993**
(21) Application number: 90106268.7
(22) Date of filing: 02.04.1990
(51) Int. Cl.: B65G 47/04, B65G 47/82

(54) **Device for loading objects on a moving conveyor belt**
Vorrichtung zum Laden von Gegenständen auf ein laufendes Förderband
Dispositif pour charger des objets sur un convoyeur à bande en marche

(30) Priority: 06.04.1989 IT 2086789 U
(43) Date of publication of application: 10.10.1990
(73) Proprietor: ALCATEL ITALIA S.p.A., 20149 Milano (IT)
(72) Inventor: Scata, Mario, Teramo (IT)
(74) Representative: Weinmiller, Jürgen

(56) References cited:
- DE-A- 2 802 339
- DE-A- 3 730 403

## Description

The present invention relates to a device for loading objects on a moving conveyor belt.

Devices of this kind are necessary both for synchronism and safety reasons (the belt can move even at high speeds) and,finally for reasons related to the fact that the operator must be, as far as possible, released from the machine.

Such devices are generally provided with a thrustor pushing the object,placed on a loading steady platform adjacent to the conveyor belt,directly on this latter, which then pulls it away.

However, this kind of device has some drawbacks.

Firstly the object, being subject to two motions,i.e. a traverse one due to the push of the thrustor and a longitudinal dragging by the belt,is forced to follow a curved trajectory.Moreover,the object touches initially,with its front edge,the belt in a peripheric zone,whereas the dragging force due to the friction produced in the contact area forces the object to turn around, thus causing an irregular motion highly undesirable in that,interalia, the orientation of the object is lost.

Secondly,the belt is often damaged or laterally bent during the loading if the object is stiff and heavy or the position of the platform with respect to the belt, is not well aligned.

Document DE-A-2 802 339 discloses a belt loading device comprising a plate receiving on its end portion the object to be loaded on the belt. This plate is moved back whereas a push bar retains the object so that the object maintains it position as it is loaded on the belt.

However, the plate should be in advanced position to receive the object, before loading thus preventing the belt to convey other objects in this area at that time.

The object of the present invention is to provide a device for loading objects on a moving conveyor belt, which eliminates the drawbacks of the last mentioned device.

According to the invention, this object is achieved through a device for loading objects on a moving conveyor belt having the features as set forth in the characterizing part of claim 1.

Further features of the invention are set forth in the subclaims.

The basic idea of the invention consists in moving forward the object in question on a plate, acting as a separating plate, and in laying it down on the belt by a quick recovery of the plate itself.

Thanks to this solution, the object is advanced nearly into contact with the belt, in a centered position with respect to this latter and laid down there, without giving rise to the aforesaid drawbacks.

And the loading device, at reat, does not prevent the conveyor belt to convey objects in the corresponding area.

Further features of the invention will become evident from the following description, taken in conjunction with the attached drawings, given as a not limitative example and in which:
Fig. 1 is a schematic view of the loading device according to the invention;
Fig. 2A) to 2D) illustrate the various loading steps of the object on the conveyor belt by means of the device in Fig.1

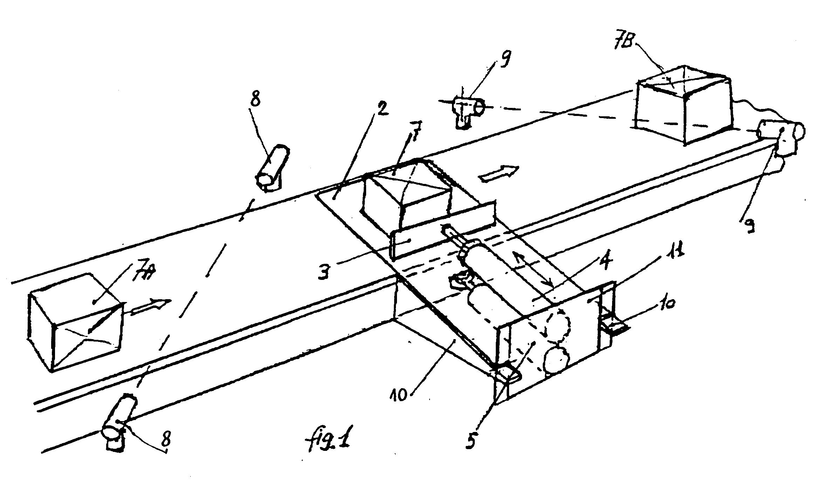

Referring now to Fig.1, the device according to the invention consists essentially of a plate 2 having a T shaped section, slidable horizontally on bearing guides 10, which are preferably fixed to the frame 6 supporting the conveyor belt 1.

Slidably arranged on the upper surface of plate 2 is a push bar 3 which is actuated by a fluid dynamic cylinder 4 engaged to head 11 of plate 2.

Located on the lower surface of plate 2 is a fluid dynamic cylinder 5,which acts upon the head 11 of the plate and is engaged to support frame 6 of conveyor belt 1.

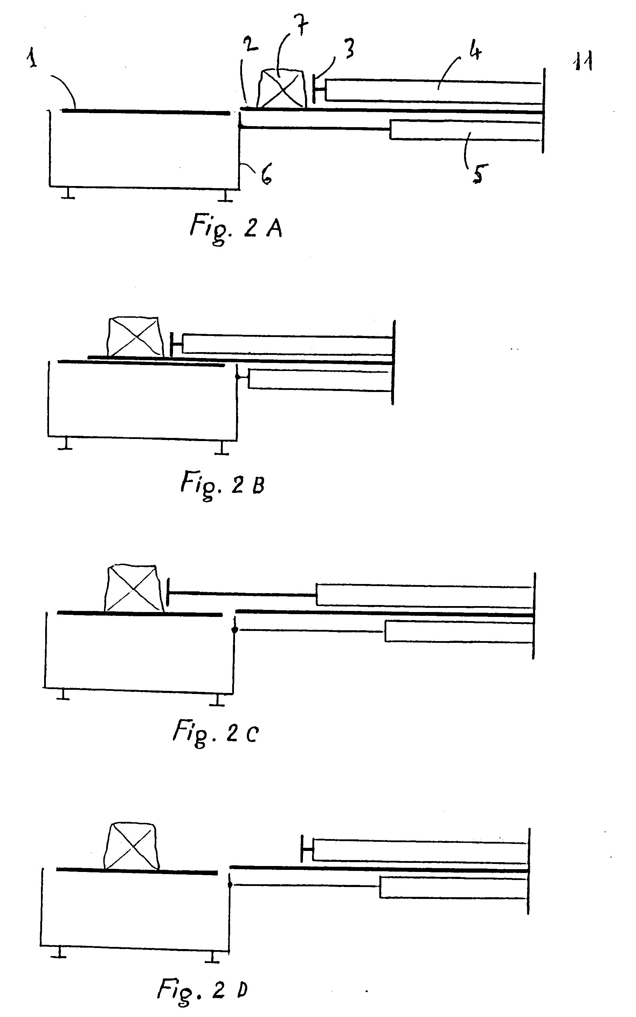

The operation of the loading device according to the invention is quite simple and will now be described with reference to figure 2A to 2D.

In the rest condition (see Fig.2A) the fluid dynamic cylinder 5 is operated,thereby the plate 2 is in its back position,out of the belt 1. The fluid dynamic cylinder 4 is released, thereby the push bar 3 is in a back position.

The object 7 to be loaded on the belt is positioned on the free end of the plate in front of the push bar (see fig, 2A).

Now, upon action of conventional means located in the conveyor system and not described herein in a detailed manner, in that being not part of the inventive concept, the fluid dynamic cylinder 5 is released so that the plate 2 is led in its advanced position (see fig. 2B).

The start of the device may be performed manually by means of a push-button or automatically, and in this case the presence of the object on the plate is revealed by detecting means (not shown in the figure),whereas the spots 8,9 (see fig.1), arranged at the edges of the conveyor belt,ensures the loading area be clear of objects 7A,7B loaded upstream.

When the plate reaches its back position, both the fluid dynamic cylinders 4,5 are synchronously operated so that the plate 2 is quickly returned in its back position, whereas the push bar 3 remains in its advanced position contrasting the object 7,so that this last is laid down on the belt 1, which provides for pulling it away (see fig.2c).

The final reset is carried out by releasing the fluid dynamic cylinder 4,which leads the push bar 3 in its back position thus allowing so the positioning of a further object on the plate (see fig.2D).

The invention fully achieves the prefixed object.

As evidenced from what above described and illustrated,the loading device according to the invention works,indeed,in such a way that the objects are loaded on the belt in the best manner so as to prevent,when entering into contact with the belt,the above mentioned drawbacks. This thanks to the fact that the object is not pushed directly on the belt but is led on it by the interposition of the plate, which stands slightly over the belt,and the object is smoothly laid down upon the combined action of the plate moving back and of the push bar holding the object in a centered position while maintaining the orientation thereof.

This,besides eliminating the drawbacks mentioned at the outset,is extremely advantageous when loading breakable objects.

The fluid dynamic cylinder 5 could act upon the outside portion of the plate head and,in this case, its operation would be inverted during the various steps.

The push bar 3 could be L-shaped in order to prevent eventual overlappings during the running, in case of manual starting.

The plate,in its back position,could be connected to a "lung" system accumulating objects from other sorting modules and so on.

## Claims

1. Device for lading objects on a moving conveyor belt (1) comprising:
- a plate (2) supported horizontally and transversal to said belt in a slidable manner and adapted to receive on its end portion the object (7) to be loaded on the belt;
- means (5) for moving said plate (2) from a back position to an advanced position and viceversa with a speedy recovery,in a direction transversal to the motion of the belt;
- a push bar (3) operative to retain the object above the plane of the belt during the loading onto the belt while maintaining the orientation of the object,
characterized in that the plate (2) has a T shaped section at its head portion and in :
- means (4) for actuating said push bar (3), which is slidably arranged on the upper surface of the plate (2), holding it in an advanced position during the recovery of the plate (2) and moving it backwards for final reset,
- said plate moving means (5) consist of at least a first fluid dynamic cylinder engaged with the frame (6) supporting the conveyor belt and acting on the head of the plate, and
- said push bar actuating means (4) consists of at least a second fluid dynamic cylinder arranged on the upper part of the plate (2) and engaged with the head thereof, said second cylinder being released during the forward motion of the plate, actuated during the recovery motion of the plate and released for push bar reset.

2. Loading device according to claim 1, characterized in that said plate (2) is supported on horizontal sliding guides fixed to the conveyor belt frame.

3. Loading device according to claim 1, further including :
- means for detecting the presence of the object on the plate when this latter is in its back position, and
- means responsive to said detecting means for the start of loading device.

## Patentansprüche

1. Vorrichtung zum Laden von Gegenständen auf ein sich bewegendes Förderband (1), enthaltend:
- eine horizontal und quer zum genannten Band gleitend gehalterte Platte (2), die ausgelegt ist, auf ihrem Endteil den auf das Band zu ladenden Gegenstand (7) zu empfangen;
- Mittel (5), um die genannte Platte (2) aus einer rückwärtigen Stellung in eine Vorwärtsstellung und umgekehrt mit schneller Erholung in einer Richtung quer zur Bewegung des Bandes zu bewegen;
- einen Stossbalken (3), wirksam, um den Gegenstand oberhalb der Ebene des Bandes während des Ladens auf das Band zurückzuhalten, wobei die Orientierung des Gegenstandes aufrechterhalten wird,
dadurch gekennzeichnet, dass die Platte (2) an ihrem Kopfteil einen T-förmigen Querschnitt und Mittel (4) zur Betätigung des genannten Stossbalkens (3) aufweist, welcher auf der obern Oberfläche der Platte (2) gleitend angeordnet ist, welche Mittel diesen in der Vorwärtsstellung halten während des Rückzugs der Platte (2) und ihn für die endgültigen Rückstellung rückwärts bewegen, wobei die genannten Plattenbetätigungsmittel (5) aus mindestens einem ersten hydraulischen Zylinder bestehen, der im Eingriff ist mit dem das Förderband tragenden Rahmen (6) und auf den Kopfteil der Platte einwirken, und wobei die Stossbalken-Betätigungsmittel (4) aus mindestens einem zweiten hydraulischen Zylinder bestehen, der auf dem obern Teil der Platte (2) angeordnet ist und in Eingriff mit deren Kopfteil ist, wobei der genannte zweite Zylinder während der Vorwärtsbewegung der Platte freigegeben ist, während der Rückzugsbewegung der Platte betätigt wird und freigegeben ist für die Rückstellung des Stossbalkens.

2. Ladevorrichtung nach Anspruch 1, dadurch gekennzeichnet, dass die genannte Platte (2) auf horizontalen Gleitführungen abgestützt ist, die am Rahmen des Förderbandes befestigt sind.

3. Ladevorrichtung nach Anspruch 1, weiter gekennzeichnet durch Mittel zur Detektion des Vorhandenseins des Gegenstandes auf der Platte, wenn letztere in ihrer rückwärtigen Stellung ist, und durch auf die Detektionsmittel ansprechende Mittel zum Start der Ladevorrichtung.

## Revendications

1. Dispositif pour le chargement d'objets sur une courroie de convoyeur en mouvement (1) comprenant:
- un plateau (2) supporté horizontalement et, de manière permettant un mouvement glissant, transversalement par rapport à cette courroie et adapté pour recevoir l'objet (7) à charger sur la courroie sur sa partie d'extrémité;
- des moyens (5) pour mouvoir ledit plateau (2) d'une position arrière dans une position avancée et vice versa, le mouvement vers l'arrière étant rapide, dans une direction transversale par rapport au mouvement de la courroie;
- une barre de poussée (3) servant à retenir l'objet au-dessus du plan de la courroie durant le chargement sur la courroie, tout en maintenant son orientation; caractérisé en ce que le plateau (2) a une section en T en sa partie de tête et en ce que :
- des moyens (4) actionnent ladite barre de poussée (3) qui est disposée de façon à pouvoir se déplacer par glissement à la surface supérieure du plateau (2), la maintenant en position avancée durant le mouvement vers l'arrière du plateau (2) et la ramenant en arrière pour le retour final au repos;
- lesdits moyens d'actionnement du plateau (5) consistant en au moins un premier cylindre à actionnement par fluide appuyé contre le cadre (6) supportant la courroie de convoyeur et agissant sur la tête du plateau, et
- lesdits moyens d'actionnement (4) de la barre de poussée consistent en au moins un second cylindre à actionnement par fluide disposé à la partie supérieure du plateau (2) et appuyant sur la tête de celui-ci, ledit second cylindre étant au repos durant le mouvement d'avance du plateau, actionné durant le mouvement vers l'arrière du plateau et remis au repos pour le retour en position de repos de la barre de poussée.

2. Dispositif de chargement conforme à la revendication 1, caractérisé en ce que ledit plateau (2) est porté par des guides permettant un glissement horizontal fixés au cadre de la courroie de convoyeur.

3. Dispositif de chargement conforme à la revendication 1, caractérisé en ce qu'il comprend en outre:
- des moyens pour détecter la présence d'un objet sur le plateau, lorsque ce dernier est dans sa position arrière, et
- des moyens répondant auxdits moyens de détection pour le démarrage du dispositif de chargement.
